Europäisches Patentamt

European Patent Office

Office européen des brevets

(11) Publication number: **0 454 137 A2**

# EUROPEAN PATENT APPLICATION

(21) Application number: 91106729.6

(51) Int. Cl.5: **G06F 15/78**

(22) Date of filing: 25.04.91

(30) Priority: 26.04.90 US 514685

(43) Date of publication of application:
30.10.91 Bulletin 91/44

(84) Designated Contracting States:
DE FR GB IT

(71) Applicant: HONEYWELL INC.
Honeywell Plaza
Minneapolis Minnesota 55408(US)

(72) Inventor: Woods, Jordon W.
5104 Larkspur Northeast
Albuquerque, New Mexico 87113(US)
Inventor: Snodgrass, Thomas D.
7001 Grange Northwest
Albuquerque, New Mexico 87120(US)
Inventor: Tetzlaff, David E.
5920 Scenic Heights Drive
Minnetonka, Minnesota 55345(US)

(74) Representative: Herzbach, Dieter et al
Honeywell Europe S.A. Holding KG Patent &
License Dept. Kaiserleistrasse 55 Postfach
10 08 65
W-6050 Offenbach am Main(DE)

(54) **High speed processing apparatus.**

(57) A high speed processor (HSP) including a processor interface, an output pipeline (212) interface, an input pipeline (214) interface, and a multichip floating point processor (110). The floating point processor (110) further comprises a data register (200) file memory, a coefficient register (204) file memory, a floating point multiplier-accumulator (201), a microsequencer (206) and a control store (208) random access memory (RAM). The high speed processor provided by the present invention is capable of operating at a clock rate of about 200MHz with the floating point processor capable of 400 MFLOPS peak performance.

In one embodiment of the invention, the HSP is entirely self contained in a TFML package with all high speed interfaces residing on the package substrate and only C-MOS speed interfaces residing off of the FPP package. The FPP comprises five GaAs integrated circuit consisting of the floating point multiplier-accumulator (MACC), the plurality of multi-port register file memories (RFM), RAM for microprogram storage and a clock generator.

Fig.-3

## Field Of The Invention

The present invention is directed generally to digital signal processing applications and, more particularly, to a high speed processor (HSP) module for digital signal processing (DSP) in real time applications wherein the HSP is implemented on a programmable platform.

## BACKGROUND OF THE INVENTION

Implementing digital imaging algorithms in real time is hardware intensive. Specific hardware solutions as found in the prior art are inflexible. Other solutions that combine pipeline hardware with programmability tend to fall short of desired throughput capabilities for high speed applications. Algorithm specific DSP devices, such as the model number UT 69532 as manufactured by United Technologies Micro Electronics Center of Colorado Springs, Colorado provide partial solutions to the problem of real time imaging. The model UT 69532's pipeline architecture provides some flexibility and achieves a throughput rate of about 75 MFLOPS peak.

It is the object of the present invention to devise a high speed processing apparatus with high performance allowing a wide variety of digital imaging problems to be solved. This object is achieved according to the characterizing features of claim 1. Further advantageous embodiments of the inventive apparatus may be taken from the dependent claims.

The present invention makes use of high speed gallium arsenide (GaAs) very large scale integrated circuits mounted on a thin film multi layer (TFML) multichip package. The architecture as provided by the present invention allows the DSP algorithms to be performed at high speed while also providing capabilities to interface to other components of a digital map graphic display system at low speeds. This invention can achieve 400 MFLOPS peak performance which is a significant improvement over prior art devices.

## SUMMARY OF THE INVENTION

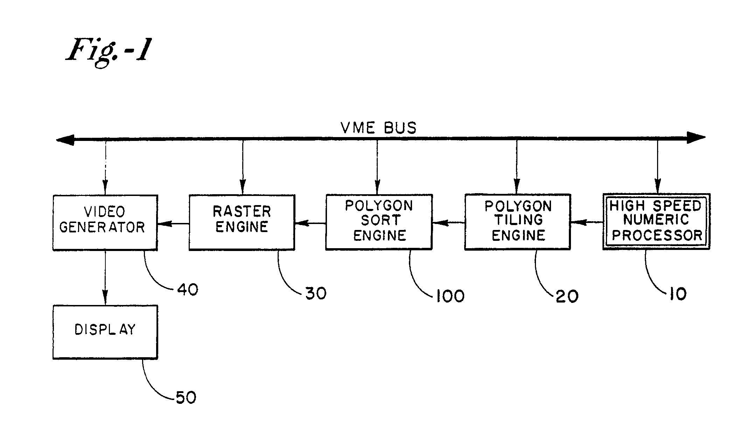

Figure 1 shows a block diagram of the major components of a high speed graphics display system. These include a means for display 50, a video generator means 40, a raster engine means 30, a polygon sort engine means 100, a polygon tiling engine means 20 and a high speed numeric processor 10. The high speed numeric processor comprises a high speed processor as provided by the invention which fits architecturally near the beginning of the pipeline to feed vertices to the polygon tiling engine. The polygon sort engine 100 is designed to receive polygon vertices from the polygon tiling engine and correctly load these vertices into the raster engine. The raster engine, in combination with the video generator, renders three dimensional raster graphics on the video display 50.

The present invention comprises a high speed processor (HSP) including a processor interface, an output pipeline interface, an input pipeline interface, and a multichip floating point processor. The floating point processor further comprises a data register file memory, a coefficient register file memory, a floating point multiplier-accumulator, a microsequencer and a control store random access memory (RAM). The high speed processor provided by the present invention is capable of operating at a clock rate of about 200MHz with the floating point processor capable of 400 MFLOPS peak performance.

In one embodiment of the invention, the HSP is entirely self contained in a TFML package with all high speed interfaces residing on the package substrate and only C-MOS speed interfaces residing off of the FPP package. The FPP comprises five GaAs integrated circuits consisting of a floating point multiplier-accumulator (MACC), a plurality of multi-port register file memories (RFM), RAM for microprogram storage and a clock generator.

In one aspect of the invention, a 50 step algorithm running at 200 MHz can be executed 4 million times per second. This matches well with the individual input and output data rates of about 5MHz. In another aspect of the invention, requiring simultaneous input and output, a 10MHz interface has been provided.

The invention provides a flexible solution to a wide variety of digital imaging problems wherein an HSP can perform 32 bit IEEE standard operations, including multiply, add and subtract operations, for example, at 200 MFLOP peak throughput.

Further the invention provides a high speed processor with low speed input/output ports for interfacing with a minimal impact on graphics system hardware.

Finally the invention provides a high speed processor having a debug interface which provides a low speed means of debugging microcode.

Other objects, features and advantages of the present invention will become apparent to those skilled in the art through the Description of the Preferred Embodiment, Claims, and drawings herein wherein like numerals refer to like elements.

## BRIEF DESCRIPTION OF THE DRAWINGS

Figure 1 is a block diagram of certain major components used in a high speed graphic display system including the high speed processor of the invention.

Figure 2 is a block diagram of one example embodiment of a high speed processor as provided by the instant invention.

Figure 3 is a block diagram of the floating point processor as employed in one aspect of the invention.

Figure 4 is a more detailed block diagram of a microsequencer as employed in one aspect of the invention.

Figure 5 is a more detailed schematic diagram of a floating points multiplexer-accumulator as employed in one aspect of the invention.

## DESCRIPTION OF THE PREFERRED EMBODIMENT

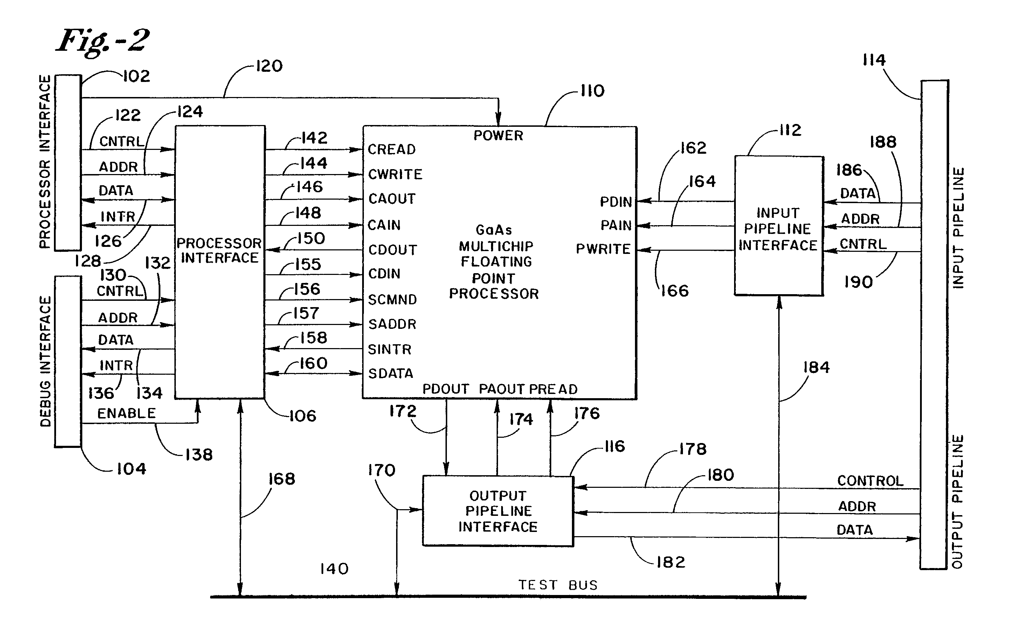

Referring now to Figure 2, a block diagram of one example embodiment of a high speed processor as provided by the instant invention is shown. The high speed processor comprises a first processor interface 102, a debug interface 104, a second processor interface 106, a floating point processor (FPP) 110, output pipeline interface 116, input pipeline interface 112 and input/output pipeline connector 114. The processor interface 106 provides a means to control the FPP in the host environment. In an airborne digital map application of the invention, control registers, micro-code, and pertinent data can be loaded and updated in a real time flight environment from a Digital Map Unit or other on-board computer. This capability is needed since coefficients for a given algorithm will change with environmental dynamics, such as aircraft dynamics.

The debug interface 104 provides a means for performing software debug functions. Break points, single step, and internal memory access are provided in the sequencer to accommodate debug of micro-code. This functionality is vital since the high speed nature of the GaAs components makes conventional debugging techniques impractical.

The pipeline interface 112 provides a path for passing a high volume of data, which is operated upon by the high speed processor. Such architecture is highly pipelined, requiring processing of multiple data points through identical operations. The pipeline interface allows the data to pass through the FPP with a minimal amount of intervention by the control processor. The control processor has been successfully implemented as a 1750A processor in certain embodiments of the invention.

As can be seen in Figure 2, various control signals, addresses and data are interchanged between the high speed processor and the rest of the graphics pipeline system. Processor interface 102 includes conductor 120 for supplying power to FPP 110. Also passed through the first processor interface 102 to the second processor interface 106 are the following signals: CNTRL, ADDR, DATA and INTR on lines 122, 124, 126 and 128, respectively. Debug interface 104 passes signals CNTR, ADDR, DATA and INTR on lines 130, 132, 134 and 136 to the second processor interface 106. Debug interface 104 also provides an enable on line 138 to the second processor interface 106. Multichip floating point processor 110 includes the following inputs received from processor interface 106: CREAD on line 142, CWRITE on line 144, CAOUT received on line 146, CAIN received on line 148, CDIN received on line 155, SCMND on line 156, and SADDR received on line 157. FPP 110 also outputs signal CDOUT on line 150 to the second processor interface 106. FPP further outputs signal SINTR to the second processor interface 106 on line 158. The second processor interface 106 communicates with test bus 140 via conductors 168.

Output pipeline interface 116 communicates with the output pipeline section of connector 114 through control signal CONTROL on line 178 and address signal ADDR on line 180. The output pipeline interface 116 outputs data to the output pipeline on line 182. The output pipeline interface 116 is connected to the test bus 140 by input/output lines 170. Output pipeline interface 116 is also connected to the FPP 110 and supplies inputs PAOUT on line 174 and PREAD on line 176. FPP 110 supplies PDOUT on line 172 to the output pipeline interface 116. Input pipeline interface 112 communicates with test bus 140 via line 184. The input pipeline interface provides signals to inputs PDIN, PAIN and PWRITE on lines 162, 164 and 166, respectively, to the FPP 110. FPP interface 112 receives data from the input portion of pipeline 114 on line 186. Address data ADDR is input via lines 188 and control signal CNTRL is presented to the input pipeline interface on line 190.

The debug interface 104 is designed into the FPP to allow external control of the FPP at full clock speed. In one example of an embodiment of the invention, the FPP is implemented as a GaAs multichip application specific integrated circuit (ASIC). The debug interface operates at about 10 MHz and controls the high speed circuitry. Debug software, which is executable on a personal computer, is used to develop FPP firmware and debug it through the debug interface. In addition, a software simulator of the FPP may be used advantageously to allow non-real-time debug FPP firmware. The debug routines and firmware to be debugged depend upon the application and may be implemented using well known techniques.

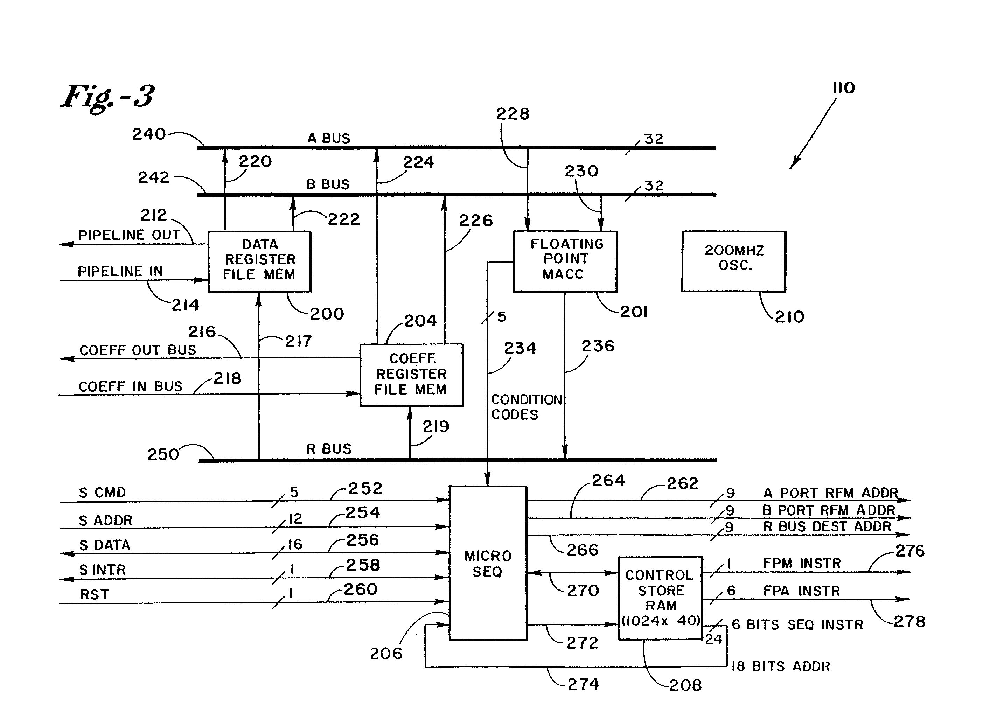

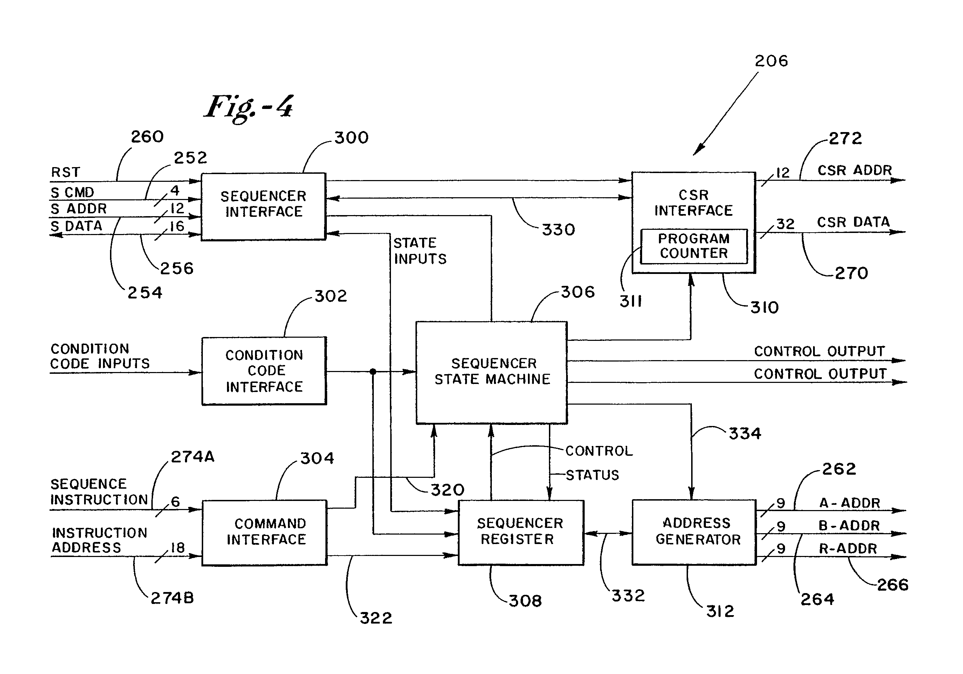

Referring now to Figure 3, a more detailed block diagram of the floating point processor 110 as provided by the invention is shown. The floating point processor comprises six major function blocks. The function blocks include identical register file memories (RFMs), namely, a data RFM 200 and a coefficient RFM 204, a microsequencer 206, a floating point multiplier-accumulator (MACC) 201 and control store RAM 208. The microsequencer 206 contains all state and control circuitry required by the processor. The control store RAM holds the microcode executed by the microsequencer. The MACC includes a floating point multiplier and floating point accumulator (described with reference to Figure 4) which perform the processor's arithmetic operations. The FPP interfaces with first high speed interface 240 called A-BUS and second high speed interface 242 called B-BUS as well as high speed input bus 250 called R-BUS.

In one example embodiment of the invention, the RFMs comprise 5 port 256 x 32 RAMs. The RFMs 200 and 204 each have two high speed outputs namely 220, 222, 224 and 226, respectively. Each of the RFMs has one high speed input. RFM 200 has high speed input 214 for receiving PIPELINE IN data and RFM 204 has high speed input 218 for receiving signals from the coefficient input bus called COEFF IN BUS. Each RFM has one output and one input tied to R-BUS 250. In one embodiment of the invention, the A-BUS port includes 8 pins for accommodating 8 bits of address data, 32 pins for accommodating 32 bits of data using a tristate output and one pin for accommodating a read strobe control signal. The B-BUS port is similarly configured. The R-BUS port is configured for high speed input and preferably includes pins to accommodate 8 bits of address input data, 32 pins to accommodate 32 bits of data and 1 pin to accommodate a write strobe.

The microsequencer 206 provides control and decision making logic for the FPP. Additionally, the sequencer provides address generation for the other components of the FPP. Part of this address generation circuitry includes an indexed addressing mode which accommodates software loops. Each address field, namely A, B and R, contains a bit to enable this indexed mode. The index bit acts as a count enable to the address generation circuitry for the duration of the loop. Exiting from the loop will disable the count and cause any new addresses to be loaded. The size and increment is controlled by a step sized register (one per address field). The length of count is controlled by a count register or alternately by a condition code input.

The microsequencer 206 provides an interface to the host environment via the sequencer interface. This interface provides a means to access sequencer status and control registers and to access or modify control store RAM 208. Additionally, this interface provides the debug facilities for the FPP. Through this interface, the sequencer can be made to halt on an address or single step through control store RAM. The microsequencer executes and makes decisions based upon a microcode stored in control store RAM. Following is a list of microsequencer instructions which may advantageously be implemented in one example of the invention:

4

1) LOAD REGISTER

    a) Load count register
    b) Load A address, step register
    c) Load B address, step register
    d) Load R address, step register
    e) Load stack pointer
    f) load program counter
    g) load A, B, or B offset register
    h) load A and B offset register immediate

2) LOOP <ADDRESS> - Jump to the specified address and
decrement the count register (CR) If CR = 0 do not jump.
Increment all enabled address counts upon jump.

3) JUMP <ADDRESS>

    a) Jump unconditionally
    b) Jump on Zero
    c) Jump on greater than
    d) Jump on less than
    e) Jump on overflow    } options
    f) Jump on widest flow  } options

4) CALL <ADDRESS>

5) RETURN

6) CONTINUE - Sequence to next address.  Normal
operating mode when issuing MULT, ADD and RFM command with no
sequencer loop or load.

    The call and return command require that a small stack be
maintained within the sequencer to hold old program counter
and register values.  Following is a list of sequencer
registers:

    a) Program counter register    (10 bits)
    b) Stack pointer register    (8 bits)
    c) Loop count register
    d) A address step register    (8 bits)
    e) B address step register    (8 bits)
    f) R address step register    (8 bits)
    g) Sequencer control register
    h) Sequencer status register    (Read Only)
    i) A address base register    (8 bits)
    j) B address base register    (8 bits)
    k) R address base register    (8 bits)
    l) A address offset register    (8 bits)
    m) B address offset register    (8 bits)
    n) R address offset register    (8 bits)

    Referring now to Figure 4 with continuing reference to Figure 3, a more detailed block diagram of the microsequencer 206 as used in one embodiment of the invention is shown. The microsequencer comprises sequencer interface 300, condition code interface 302, command interface 304, sequencer state machine 306, sequencer register 308, control store RAM interface 310, and address generator 312. The sequencer interface receives command word RST to reset the sequencer on line 260. SCMD is advantageously a 4-bit command word which is input on line 252 into the sequencer interface 300. Address data S ADDR, in this example a 12-bit word, is input on line 254 to the sequencer interface. A 16-bit data bus with sequencer data S DATA is ported on conductors 256. Sequencer instructions are transmitted on conductors 274 which, in this example, comprise conductors capable of carrying 24 bits of information divided into sequencer instructions labeled SEQINSTR, which in this example, is a 6-bit instruction carried on lines 274A. The remainder of lines 274 are labeled lines 274B and carry instruction addresses labeled INSTR ADDR which are input into the command interface 304. The address generator 312 outputs command A-ADDR on line 262, B-ADDR on line 264 and R-ADDR on line 266. A-ADDR is, in this example, a 9-bit word comprising the destination address sent to the A Port of the RFMs. B-ADDR is, in this example, a 9-bit address sent to the B ports of the RFMs. Similarly, R-ADDR is, in this example a 9-bit address which represents the R-BUS destination address.

The command interface 304 functions to receive sequencer instructions and the address field for the instructions from the control store RAM (CSR) 208. The command interface interprets the sequence instructions and the instruction addresses and provides appropriate inputs on line 320 to the sequencer state machine and line 322 to the sequencer registers. Following are operation codes and address field assignments as used in the command interface in one example of the invention.

a) Continue (CNT)

```
|1 1 1 0 0 0|x x x x x x x x x x x x|0
 23                                   0
  OPCODE          ADDRESS
```

b) Load Register

i) Load A Offset Immediate (LDAO)

```
|0 0 1|0 0 0 0|x x x x x 0|D8 D7 D6 D5 D4 D3 D2 D1 D0|
```

ii) Load A Offset Indexed (LXAO)

```
|0 0 1|0 0 0 0|x x x x x 1|D8 D7 D6 D5 D4 D3 D2 D1 D0|
```

iii) Load B Offset Immediate (LDBO)

```
|0 0 1|0 0 0 1|x x x x x 0|D8 D7 D6 D5 D4 D3 D2 D1 D0|
```

iv) Load B Offset Indexed (LDBO)

```
|0 0 1|0 0 0 1|x x x x x 1|D8 D7 D6 D5 D4 D3 D2 D1 D0|
```

v) Load R Offset Immediate (LDRO)

$|0\ 0\ 1|0\ 1\ 0|x\ x\ x\ x\ x\ x\ x\ 0|D_8\ D_7\ D_6\ D_5\ D_4\ D_3\ D_2\ D_1\ D_0|$

vi) Load R Offset Indexed (LXRO)

$|0\ 0\ 1|0\ 1\ 0|x\ x\ x\ x\ x\ x\ x\ 1|D_8\ D_7\ D_6\ D_5\ D_4\ D_3\ D_2\ D_1\ D_0|$

vii) Load A and B Offset Immediate (LDAB)

$|0\ 0\ 0|1\ 1\ 1|A_8\ A_7\ A_6\ A_5\ A_4\ A_3\ A_2\ A_1\ A_0|B_8\ B_7\ B_6\ B_5\ B_4\ B_3\ B_2\ B_1\ B_0|$

viii) Load A Step Register (LDAS)

$|0\ 0\ 1|0\ 1\ 1|x\ x\ x\ x\ x\ x\ x\ x\ x|D_7\ D_6\ D_5\ D_4\ D_3\ D_2\ D_1\ D_0|$

ix) Load B Step Register (LDBS)

$|0\ 0\ 1|1\ 0\ 0|x\ x\ x\ x\ x\ x\ x\ x\ x|D_7\ D_6\ D_5\ D_4\ D_3\ D_2\ D_1\ D_0|$

EP 0 454 137 A2

v) Load R Step Register (LDRS)

$|0\ 0\ 1|1\ 0\ 1|x\ x\ x\ x\ x\ x\ x\ x\ x|D_7\ D_6\ D_5\ D_4\ D_3\ D_2\ D_1\ D_0|$

vi) Load Count Register (LDCO)

$|0\ 0\ 1|1\ 1\ 0|x\ x\ x\ x\ x\ x\ x\ x\ x|D_7\ D_6\ D_5\ D_4\ D_3\ D_2\ D_1\ D_0|$

xii) Load Stack Pointer (LDSP)

$|0\ 0\ 1|1\ 1\ 1|x\ x\ x\ x\ x\ x\ x\ x\ x|D_7\ D_6\ D_5\ D_4\ D_3\ D_2\ D_1\ D_0|$

c) Loop (LP)

$|0\ 1\ 0|0\ 0\ 0|x\ x\ x\ x\ x\ x\ x\ x|D_9\ D_8\ D_7\ D_6\ D_5\ D_4\ D_3\ D_2\ D_1\ D_0|$

d) Jump
i) Jump unconditionally (JMP)

$|0\ 1\ 1|0\ 0\ 0|x\ x\ x\ x\ x\ x\ x\ x|D_9\ D_8\ D_7\ D_6\ D_5\ D_4\ D_3\ D_2\ D_1\ D_0|$

EP 0 454 137 A2

## ii) Jump on Zero (JZ)

$|0\ 1\ 1|0\ 0\ 1|x\ x\ x\ x\ x\ x\ x\ x|D_9\ D_8\ D_7\ D_6\ D_5\ D_4\ D_3\ D_2\ D_1\ D_0|$

## iii) Jump On Equal (JE)

$|0\ 1\ 1|0\ 1\ 0|x\ x\ x\ x\ x\ x\ x\ x|D_9\ D_8\ D_7\ D_6\ D_5\ D_4\ D_3\ D_2\ D_1\ D_0|$

## iv) Jump On Greater Than (JG)

$|0\ 1\ 1|0\ 1\ 1|x\ x\ x\ x\ x\ x\ x\ x|D_9\ D_8\ D_7\ D_6\ D_5\ D_4\ D_3\ D_2\ D_1\ D_0|$

## v) Jump On Less Than (JL)

$|0\ 1\ 1|1\ 0\ 0|x\ x\ x\ x\ x\ x\ x\ x|D_9\ D_8\ D_7\ D_6\ D_5\ D_4\ D_3\ D_2\ D_1\ D_0|$

## vi) Jump on Overflow (JO)

$|0\ 1\ 1|1\ 0\ 1|x\ x\ x\ x\ x\ x\ x\ x|D_9\ D_8\ D_7\ D_6\ D_5\ D_4\ D_3\ D_2\ D_1\ D_0|$

vii) Jump on Underflow (JU)

$$|0\ 1\ 1|1\ 0\ x|x\ x\ x\ x\ x\ x\ x\ x\ x|D_9\ D_8\ D_7\ D_6\ D_5\ D_4\ D_3\ D_2\ D_1\ D_0|$$

e) Call (CALL)

$$|1\ 0\ 0|0\ 0\ x|x\ x\ x\ x\ x\ x\ x\ x\ x|D_9\ D_8\ D_7\ D_6\ D_5\ D_4\ D_3\ D_2\ D_1\ D_0|$$

f) Return (RTN)

$$|1\ 0\ 1|0\ 0\ 0|x\ x\ x\ x\ x\ x\ x\ x\ x\ x\ x\ x\ x\ x\ x\ x|$$

The sequencer interface 300 receives and interprets commands from the host environment. It is a low speed interface used primarily for setup or debug purposes. The sequencer interface provides a low speed window into the high speed environment of the FPP. The following list is a list of sequencer interface functions as provided in one example of the invention:

a) Read-Write internal register,

b) Read-Write to control store RAM,

c) Halt on address,

d) Step on cycle, and

e) Halt.

These functions are implemented using known techniques through a combination of control register bits and sequencer commands. One example of signal implementation for each of these commands is shown in Table 1 below.

**Table 1**

| Command | $A_9A_8A_7A_6A_5A_4A_3A_2A_1A_0$ | MS | SO | S1 | CS | RW |
|---|---|---|---|---|---|---|
| Normal Mode | (Don't Care) | X | 0 | 0 | X | X |
| Normal Mode | (Don't Care) | X | X | X | 1 | X |
| Read Register | (Register Address) | X | 1 | 0 | 0 | 0 |
| Write Register | (Register Address) | X | 1 | 0 | 0 | 1 |
| Write CSR Bank 0 | (CSR Address) | 0 | 0 | 1 | 0 | 1 |
| Read CSR Bank 0 | (CSR Address) | 0 | 0 | 1 | 0 | 0 |
| Write CSR Bank 1 | (CSR Address) | 1 | 0 | 1 | 0 | 1 |
| Read CSR Bank 1 | (CSR Address) | 1 | 0 | 1 | 0 | 0 |
| Single Step | (Don't Care) | X | 1 | 1 | 0 | 1 |

The condition code interface 302 receives condition codes from the floating point multiplier-accumulator and passes them as state inputs to the sequencer state machine. Some of the condition codes used in the condition code interface include:

a) GREATER THAN,

b) LESS THAN,

c) EQUAL TO,

d) ZERO,

e) OVERFLOW,

f) UNDERFLOW, and

g) NAN (Not a Number).

The control store RAM or CSR interface 310 provides the address and data interface to the CSR 208. Address information is supplied to the CSR interface via the sequencer interface on line 330 or from the self-contained program counter. The program counter 311 may be preloaded from the sequencer registers, CMD interface or sequencer interface 300.

The address generator 312 provides internal addressing to and from the RFMs. It is in communication with the sequencer registers via lines 332 and the sequencer state machine via lines 334. The sequencer state machine provides state control as well as control strobes to other elements in the FPP, including the sequencer interface, condition code interface, command interface, sequencer registers, address generator and CSR interface.

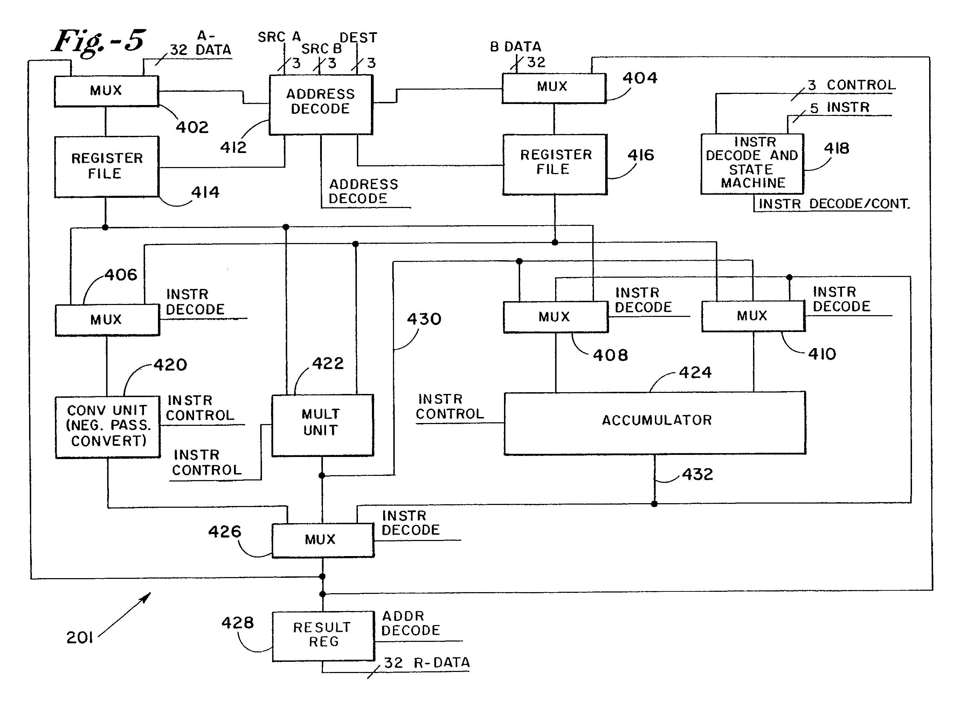

Referring now to Figure 5, a more detailed block diagram of the floating points multiplier-accumulator (MACC) 201 is shown. In one example of the invention, the MACC implements IEEE 754 - 1985, standard floating point arithmetic. The MACC comprises an A-DATA multiplexer 402, a B-DATA multiplexer 404, a third multiplexer 406, a fourth multiplexer 408, and a fifth multiplexer 410. Further included in the MACC are an address decoder ADDR-DEC 412, first register file 414, a second register file 416, an instruction decoder and state machine 418, a conversion means 420, a multiplier unit 422, an accumulator 424, a sixth output multiplexer 426, and a result register 428. These elements are structured and arranged in accordance with well-known computer architecture techniques to operate as a floating points multiplier-accumulator.

In operation, the MACC is able to convert from integer to floating point and floating point back to integer formats. It is designed to accept data in any of these formats, operate on the data and output the result in any of the aforesaid formats. The accumulator can receive inputs from the multiplier unit 422 on line 430 or its own output on line 432. This arrangement allows for accumulate, multiplying and accumulate, and multiply and add instructions.

## Claims

1. Apparatus for providing high speed processing in a digital processor including an input pipeline (214) and an output pipeline (212) **characterized by:**
   (a) a processor interface means (106) for interfacing with external digital system processors;
   (b) a floating point processor means (110) coupled at a first plurality of ports (142, 144, 146, 148, 150, 155, 156, 152, 158, 160) to the processor interface means (106) for providing high speed mathematical functions wherein the floating point processor (110) includes:
      (i) data register means (200) for storing and providing pipeline data,
      (ii) coefficient register means (204) for storing and providing coefficient data,
      (iii) floating point multiplier-accumulator means (201) for providing mathematical data processing,
      (iv) microsequencer means (206) coupled to the floating point multiplier-accumulator means (201) for control of the floating point multiplier-accumulator means (201),
      (v) control store means (208) coupled to the microsequencer means (206) for storing microcode used to operate the microsequencer means (206),
      (vi) communication bus means (240, 242, 250) coupled to the data register means (200), coefficient register means (204), and floating point accumulator-multiplier means (201) for providing data and control signal transmissions;
   (c) an input pipeline interface (112) means for receiving pipeline inputs from the input pipeline, wherein the input pipeline interface means (112) is connected between the input pipeline and the floating point processor means (110); and
   (d) an output pipeline interface means (116) connected between the floating point processor means (110) and the output pipeline for providing an interface between them.

2. Apparatus according to Claim 1 **characterized in that** the floating point processor means (110) is embodied in an integrated circuit comprised of Gallium Arsenide.

3. Apparatus according to Claim 1 further **characterized by** a test bus means (140) for transmitting test signals connected to the processor interface means (106) and the output pipeline interface (116).

4. Apparatus according to Claim 3 **characterized in that** the microsequencer (206) is comprised of:
   (a) a sequencer interface (300) for receiving data signals (256), command signals (252), address signals (254) and control signals (260) and for outputting data from the floating point processor means (110);
   (b) a control store RAM interface circuit (310) having first (270) and second data ports (272) coupled to the sequencer interface (300);
   (c) sequencer registers (308) coupled to the sequencer interface (300);
   (d) a command interface circuit (304) for receiving and transmitting sequence instructions and instruction addresses coupled at one output to the sequencer registers (308);
   (e) a condition code interface (302) for receiving and transmitting condition code inputs coupled to the sequencer registers (308);
   (f) an address generator (312) having a plurality address outputs coupled to the communication bus means and further being coupled to the sequencer registers (308); and

(g) a sequencer state machine (306) coupled to the sequencer interface (300) to receive state inputs, coupled to receive inputs from the command interface (304) and condition code interface (302), coupled to receive control signals from the sequencer registers (308) and to send status data to the sequencer registers (308), further coupled to the control store RAM interface (310) and including a plurality of control outputs.

5. Apparatus according to Claim 4 **characterized in that** the interface (106) comprises a low speed sequencer interface so as to provide a means for debugging or setting up the floating point processor means (110).

6. Apparatus according to Claim 5 **characterized in that** condition codes used in the condition code interface (302) includes GREATER THAN, LESS THAN, EQUAL, ZERO, OVERFLOW, UNDERFLOW and NOT A NUMBER.

7. Apparatus according to Claim 6 **characterized in that** the sequencer interface (300) provides a plurality of functions including:

(a) Read-Write internal register;
(b) Read-Write to control store RAM;
(c) Halt on address;
(d) Step on cycle; and
(e) Halt.

## Fig.-1

VME BUS

| VIDEO GENERATOR | RASTER ENGINE | POLYGON SORT ENGINE | POLYGON TILING ENGINE | HIGH SPEED NUMERIC PROCESSOR |

40   30   100   20   10

DISPLAY

50

Fig.-2

Fig.-3

Fig.-4

Fig.-5